# EUROPEAN PATENT SPECIFICATION

(11) **EP 4 079 587 B1**
(45) Date of publication and mention of the grant of the patent: **14.06.2023**
(21) Application number: 21206454.7
(22) Date of filing: 04.11.2021
(51) Int. Cl.: B60T 8/36

(54) **STRADDLED VEHICLE**
GRÄTSCHSITZFAHRZEUG
VÉHICULE À ENFOURCHER

(30) Priority: 23.04.2021 JP 2021073163
(43) Date of publication of application: 26.10.2022
(73) Proprietor: Yamaha Hatsudoki Kabushiki Kaisha, Iwata-shi, Shizuoka 438-8501 (JP)
(72) Inventor: Ito, Masato, Iwata-shi (JP); Ozawa, Toshiaki, Iwata-shi (JP)
(74) Representative: Grünecker Patent- und Rechtsanwälte PartG mbB

(56) References cited:
- WO-A1-2011/099209
- JP-A- 2017 030 394
- US-A1- 2005 134 114
- US-A1- 2007 200 430

## Description

The present invention relates to a straddled vehicle.

Some straddled vehicles are equipped with ABS (Anti-lock Brake System). ABS includes a hydraulic unit that controls the hydraulic pressure to the brakes. For example, as in the straddled vehicle disclosed in Japan Laid-open Patent Application Publication No. JP-A-2017-030394, the hydraulic unit is connected to the front brake and the rear brake via a brake pipe. The hydraulic unit is located on the left side of the seat. The front brake is located on the right side of the front wheel. The brake pipe extends forward from the hydraulic unit on the left side of the vehicle body frame, extends left and right behind the engine, and extends rearward toward the rear brake on the right side of the vehicle body frame.

There is a so-called up-muffler type vehicle in which the muffler is disposed higher than the rear wheel. In the up-muffler type straddled vehicle, a portion of the exhaust pipe extending from the engine to the muffler is disposed so as to intersect the vehicle body frame. Therefore, when a portion of the brake pipe is disposed along the vehicle body frame, the brake pipe is also disposed so as to intersect the exhaust pipe. In that case, since the brake pipe is disposed close to the exhaust pipe, the brake oil in the brake pipe may be affected by heat from the exhaust pipe.

On the other hand, when the brake pipe extends in the left-right direction behind the engine as in the above-mentioned straddled vehicle, the brake pipe can be disposed while avoiding the exhaust pipe. However, in that case, the brake pipe becomes long. If the brake pipe is long, the layout of the brake pipe becomes complicated and the weight of the brake pipe becomes heavy.

An object of the present invention is to provide a straddled vehicle that can suppress heat influence from an exhaust pipe on brake oil in a brake pipe in an up-muffler type straddled vehicle while preventing the brake pipe from becoming long, and avoiding interference between the exhaust pipe and the brake pipe. According to the present invention said object is solved by a straddled vehicle having the features of independent claim 1. Preferred embodiments are laid down in the dependent claims.

A straddled vehicle according to one aspect of the present invention includes an engine, a vehicle body frame, a rear wheel, a muffler, an exhaust pipe, a rear brake, a hydraulic unit, and a brake pipe. The vehicle body frame supports the engine. The muffler is at least partially located higher than the rear wheel. The exhaust pipe intersects the vehicle body frame as seen in a vehicle side view. The exhaust pipe extends from the engine to the muffler through the inside of the vehicle body frame in the vehicle left-right direction. The rear brake is configured to brake the rear wheel. The hydraulic unit is configured to control the hydraulic pressure to the rear brake. The brake pipe extends from the hydraulic unit to the rear brake. The brake pipe is at least partially disposed along the vehicle body frame. The brake pipe includes a bent portion that overlaps with the exhaust pipe as seen in the vehicle side view. The bent portion is disposed further inside of the vehicle body frame with regard to the exhaust pipe in the vehicle left-right direction.

In the straddled vehicle according to the present invention, the brake pipe is disposed so as to avoid the exhaust pipe at the bent portion. As a result, it is possible to suppress the lengthening of the brake pipe and prevent the brake oil in the brake pipe from being affected by heat from the exhaust pipe while avoiding interference between the exhaust pipe and the brake pipe. Further, the bent portion is disposed inside the exhaust pipe in the vehicle left-right direction. If the bent portion is disposed outside the exhaust pipe in the vehicle left-right direction, the arrangement of the bent portion is restricted by the vehicle body frame disposed outside the exhaust pipe. However, since the bent portion is disposed inside the exhaust pipe, the bent portion can be disposed without being restricted by the vehicle body frame. As a result, it becomes easy to provide a large distance between the exhaust pipe and the bent portion. Therefore, the brake oil in the brake pipe is further suppressed from being affected by the heat of the exhaust pipe.

In the vehicle left-right direction, a gap between the exhaust pipe and the bent portion may be larger than a gap between the vehicle body frame and the exhaust pipe. In this case, the large gap between the exhaust pipe and the bent portion further suppresses the heat influence on the brake oil.

The bent portion may include a linear shape as seen in the vehicle side view. In this case, the shortening of the brake pipe reduces the loss of hydraulic pressure.

The brake pipe may further include a front portion and a rear portion. The front portion may be connected to the bent portion and may be located forward of the bent portion. The rear portion may be connected to the bent portion and may be located rearward of the bent portion. The front portion and the rear portion may be aligned in a straight line as seen in a vehicle top view. In this case, since the front portion and the rear portion are aligned in a straight line, the brake pipe is shortened. As a result, the loss of hydraulic pressure is reduced.

The bent portion may include an upper portion located above the exhaust pipe. The upper portion may overlap with the exhaust pipe as seen in the vehicle top view and may extend linearly in the vehicle left-right direction. In this case, the brake pipe is shortened because the upper portion extends linearly. As a result, the loss of hydraulic pressure is reduced.

The bent portion may include a lower portion located below the exhaust pipe. The lower portion may overlap with the exhaust pipe as seen in the vehicle top view and may extend linearly in the vehicle left-right direction. In this case, the brake pipe is shortened because the lower portion extends linearly. As a result, the loss of hydraulic pressure is reduced.

The bent portion may further include a side portion. The side portion may be disposed inside the exhaust pipe in the vehicle left-right direction. The side portion may include a first straight portion and a second straight portion. The side portion may have a bent shape between the first straight portion and the second straight portion as seen in the vehicle top view. In this case, since the side portion is bent, interference with other parts can be avoided.

The hydraulic unit and the rear brake may be disposed on the same side in the left-right direction with respect to a center line of the straddled vehicle extending in the vehicle front-rear direction. In this case, the brake pipe become shorter than when the hydraulic unit and the rear brake are disposed on different sides in the left-right direction.

The straddled vehicle may further include a front wheel, a front brake, a front brake operating member, and a rear brake operating member. The front brake may be configured to brake the front wheel. The front brake operating member may be for operating the front brake. The rear brake operating member may be for operating the rear brake. The hydraulic unit may be disposed between the front brake operating member and the rear brake operating member as seen in a vehicle plan view. In this case, the lengthening of the brake pipe is suppressed.

The hydraulic unit may be disposed forward of the bent portion. In this case, the degree of freedom in the layout of the hydraulic unit is improved.

### BRIEF DESCRIPTION OF THE DRAWINGS

FIG. 1 is a side view of a straddled vehicle according to an embodiment.
FIG. 2 is a top view of the straddled vehicle.
FIG. 3 is an enlarged side view of an engine and its surroundings.
FIG. 4 is a schematic view showing a configuration of a brake system for the straddled vehicle.
FIG. 5 is a perspective view showing a rear brake pipe and its surroundings.
FIG. 6 is a top view schematically showing the rear brake pipe, an exhaust pipe, and a first main frame.

### DESCRIPTION OF EMBODIMENTS

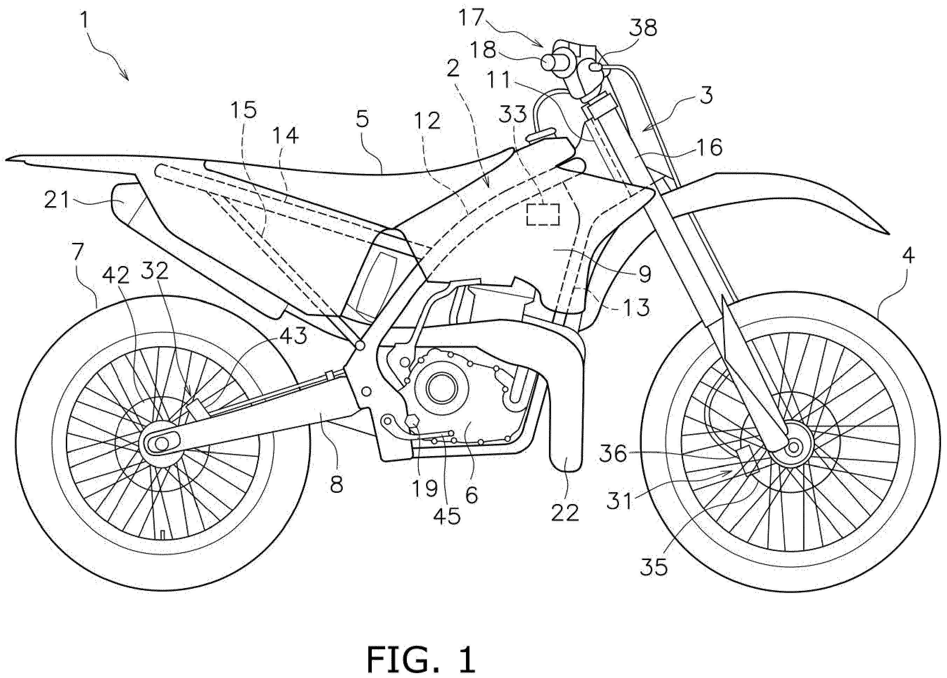

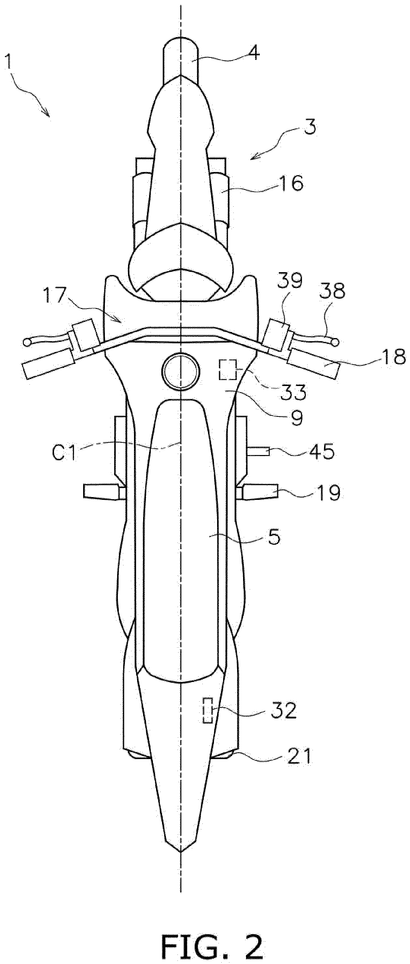

Hereinafter, a straddled vehicle according to an embodiment will be described with reference to the drawings. FIG. 1 is a side view of the straddled vehicle 1 according to the embodiment. FIG. 2 is a top view of the straddled vehicle 1. As illustrated in FIG. 1, the straddled vehicle 1 includes a vehicle body frame 2, a steering device 3, a front wheel 4, a seat 5, an engine 6, a rear wheel 7, a swing arm 8, and a vehicle body cover 9. In the present embodiment, the front-rear, left-right directions mean the front-back, left-right directions as seen from a rider seated on the seat 5.

The vehicle body frame 2 includes a head pipe 11, a first main frame 12, a second main frame 13, a first rear frame 14, and a second rear frame 15. The head pipe 11 extends forward and downward. The first main frame 12 is connected to the head pipe 11. The first main frame 12 extends from the head pipe 11 through behind the engine 6. The first main frame 12 extends rearward and downward.

The second main frame 13 is connected to the head pipe 11. The second main frame 13 extends from the head pipe 11 through the front of the engine 6. In addition, in this specification, "connection" is not limited to a plurality of separate parts being connected to each other by welding, bonding, or fixing means such as bolts, and a plurality of parts included in an integral portion being continuously connected each other.

The first rear frame 14 is connected to the first main frame 12. The first rear frame 14 extends rearward and upward from the first main frame 12. The second rear frame 15 is connected to the first main frame 12. The second rear frame 15 is disposed below the first rear frame 14 with regard to up-down direction of the straddled vehicle 1. The second rear frame 15 extends rearward and upward.

The steering device 3 is rotatably supported by the head pipe 11. The steering device 3 is configured to be steered by the rider. The steering device 3 includes a front fork 16 and a handle member 17. The front fork 16 rotatably supports the front wheel 4. The front fork 16 is rotatably supported by the head pipe 11. The handle member 17 is connected to the front fork 16. The handle member 17 includes a grip 18. The grip 18 extends in the left-right direction of the vehicle. The grip 18 is gripped by the rider.

The seat 5 is disposed behind the head pipe 11. The seat 5 is supported by the vehicle body frame 2. The engine 6 is disposed below the seat 5. The engine 6 is supported by the first main frame 12 and the second main frame 13. The engine 6 is disposed between the first main frame 12 and the second main frame 13. A footrest 19 is disposed below the seat 5. The footrest 19 projects laterally from the first main frame 12.

The engine 6 generates a driving force for rotating the rear wheel 7. The rear wheel 7 is disposed behind the engine 6. The rear wheel 7 are connected to the first main frame 12 via the swing arm 8. The swing arm 8 is swingably supported by the first main frame 12. The rear wheel 7 is rotatably supported by the swing arm 8.

The vehicle body cover 9 is disposed on the outside of the first main frame 12 in the vehicle left-right direction. The vehicle body cover 9 covers the first main frame 12 from the side. As seen in a vehicle side view, the vehicle body cover 9 overlaps with at least a portion of the first main frame 12. As seen in the vehicle side view, at least a portion of the vehicle body cover 9 is located above the engine 6.

The straddled vehicle 1 includes a muffler 21 and an exhaust pipe 22. The muffler 21 silences the exhaust gas from the engine 6 and discharges the exhaust gas. The muffler 21 extends rearward and upward. At least a portion of the muffler 21 is disposed higher than the rear wheel 7 with regard to up-down direction of the straddled vehicle 1. The rear end of the muffler 21 is located higher than the top of the rear wheel 7 with regard to up-down direction of the straddled vehicle 1. A portion of the muffler 21 may be located lower than the top of the rear wheel 7. A portion of the muffler 21 may overlap with the rear wheel 7 as seen in the vehicle side view.

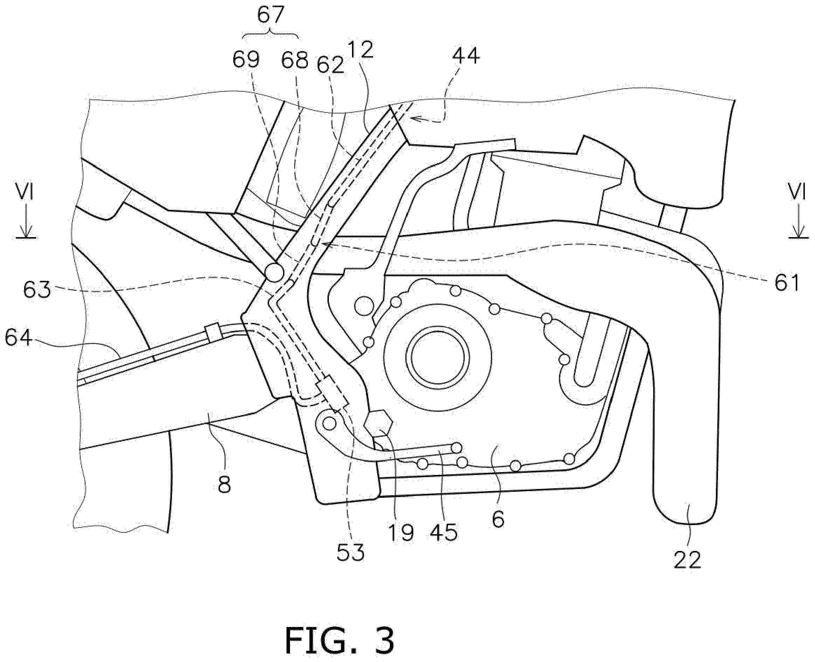

The exhaust pipe 22 is connected to the engine 6 and the muffler 21. The exhaust pipe 22 extends from the engine 6 toward the muffler 21. The exhaust gas from the engine 6 flows to the muffler 21 through the exhaust pipe 22. FIG. 3 is an enlarged side view of the engine 6 and its surroundings. As illustrated in FIG. 3, the exhaust pipe 22 extends forward from the engine 6 and is bent rearward in front of the engine 6. The exhaust pipe 22 extends rearward through the outside of the engine 6 in the vehicle left-right direction.

The exhaust pipe 22 intersects the first main frame 12 as seen in the vehicle side view. The exhaust pipe 22 overlaps with the first main frame 12 as seen in the vehicle side view. The exhaust pipe 22 intersects the first main frame 12 behind the engine 6 as seen in the vehicle side view. The exhaust pipe 22 passes through the inside of the vehicle body frame 2 in the vehicle left-right direction and extends toward the muffler 21.

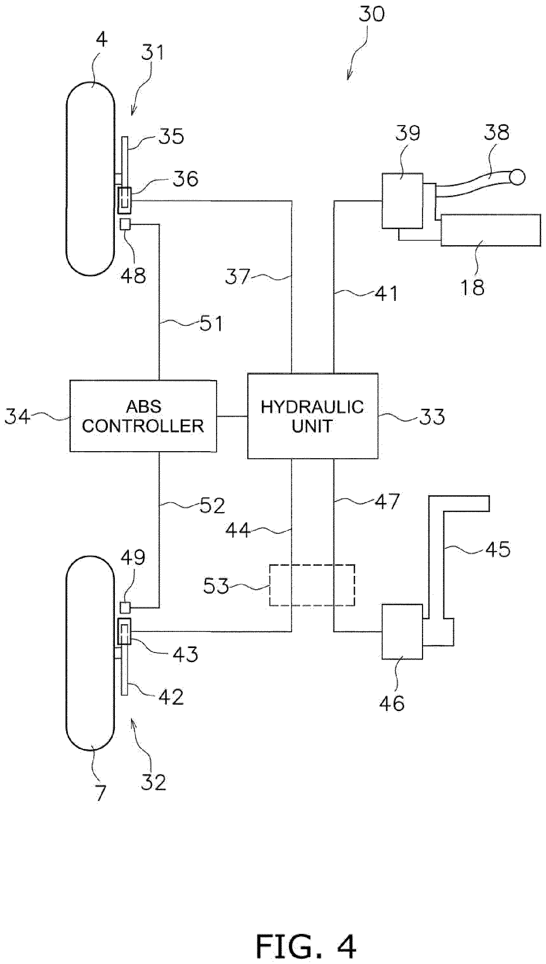

FIG. 4 is a schematic view showing a configuration of a brake system 30 of the straddled vehicle 1. As illustrated in FIG. 4, the brake system 30 includes a front brake 31, a rear brake 32, a hydraulic unit 33, and an ABS (Anti-lock Braking System) controller 34. The front brake 31 brakes the front wheel 4. The rear brake 32 brakes the rear wheel 7. As illustrated in FIG. 2, the hydraulic unit 33 and the rear brake 32 are disposed on the same side in the left-right direction with respect to the center line C1 of the straddled vehicle 1 extending in the vehicle front-rear direction. In the present embodiment, the hydraulic unit 33 and the rear brake 32 are disposed on the right side with respect to the center line C1 of the straddled vehicle 1. The front brake 31 and the rear brake 32 are hydraulic disc brakes.

The front brake 31 includes a front brake disc 35 and a front brake caliper 36. The front brake disc 35 is connected to the front wheel 4. The front brake caliper 36 brakes the front wheel 4 by sandwiching the front brake disc 35 by hydraulic pressure. The front brake caliper 36 is connected to the hydraulic unit 33 via the front brake pipe 37.

The brake system 30 includes a brake lever 38 and a front master cylinder 39. The brake lever 38 is an example of a front brake operating member for operating the front brake 31. The brake lever 38 is disposed in front of the grip 18. The front master cylinder 39 is connected to the brake lever 38. The front master cylinder 39 generates brake hydraulic pressure according to the operation of the brake lever 38. The front master cylinder 39 is connected to the hydraulic unit 33 via the front connecting pipe 41.

When the brake lever 38 is operated, the front master cylinder 39 generates the brake hydraulic pressure corresponding to the operation of the brake lever 38. This brake hydraulic pressure is supplied to the hydraulic unit 33 through the front connecting pipe 41. The hydraulic unit 33 operates the front brake 31 by supplying the brake hydraulic pressure to the front brake 31 through the front brake pipe 37.

The rear brake 32 includes a rear brake disc 42 and a rear brake caliper 43. The rear brake disc 42 is connected to the rear wheel 7. The rear brake caliper 43 brakes the rear wheel 7 by sandwiching the rear brake disc 42 by hydraulic pressure. The rear brake caliper 43 is connected to the hydraulic unit 33 via the rear brake pipe 44.

The brake system 30 includes a brake pedal 45 and a rear master cylinder 46. The brake pedal 45 is an example of a rear brake operating member for operating the rear brake 32. The brake pedal 45 is disposed below the footrest 19. The rear master cylinder 46 is connected to the brake pedal 45. The rear master cylinder 46 generates brake hydraulic pressure according to the operation of the brake pedal 45. The rear master cylinder 46 is connected to the hydraulic unit 33 via the rear connecting pipe 47.

When the brake pedal 45 is operated, the rear master cylinder 46 generates the brake hydraulic pressure corresponding to the operation of the brake pedal 45. This brake hydraulic pressure is supplied to the hydraulic unit 33 though the rear connecting pipe 47. The hydraulic unit 33 operates the rear brake 32 by supplying the brake hydraulic pressure to the rear brake 32 though the rear brake pipe 44.

The hydraulic unit 33 is disposed inside the vehicle body cover 9, for example. The hydraulic unit 33 is disposed higher than the exhaust pipe 22 with regard to up-down direction of the straddled vehicle 1. However, the hydraulic unit 33 may be disposed at a place other than the inside of the vehicle body cover 9. The hydraulic unit 33 is disposed between the brake lever 38 and the brake pedal 45 in a vehicle plan view. The hydraulic unit 33 includes an electric motor, a pump, a solenoid valve and the like. The hydraulic unit 33 controls the brake hydraulic pressure of the front brake 31 and the rear brake 32 in response to a signal from the ABS controller 34.

The brake system 30 includes a front wheel sensor 48 and a rear wheel sensor 49. The front wheel sensor 48 detects the rotation speed of the front wheel 4 and outputs a signal indicating the rotation speed of the front wheel 4. The rear wheel sensor 49 detects the rotation speed of the rear wheel 7 and outputs a signal indicating the rotation speed of the rear wheel 7. The ABS controller 34 is connected to the front wheel sensor 48 via a communication line 51. The ABS controller 34 receives the signal from the front wheel sensor 48 indicating the rotation speed of the front wheel 4. The ABS controller 34 is connected to the rear wheel sensor 49 via a communication line 52. The ABS controller 34 receives the signal from the rear wheel sensor 49 indicating the rotation speed of the rear wheel 7. The ABS controller 34 monitors the rotation speed of the front wheel 4 and the rotation speed of the rear wheel 7, and controls the brake hydraulic pressure from the hydraulic unit 33 so that the front wheel 4 and the rear wheel 7 do not lock.

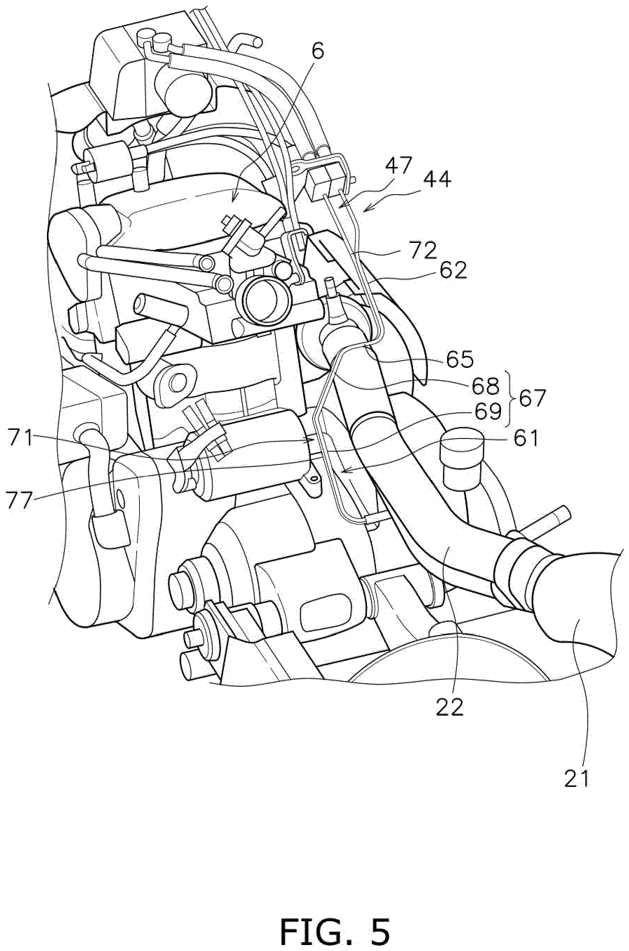

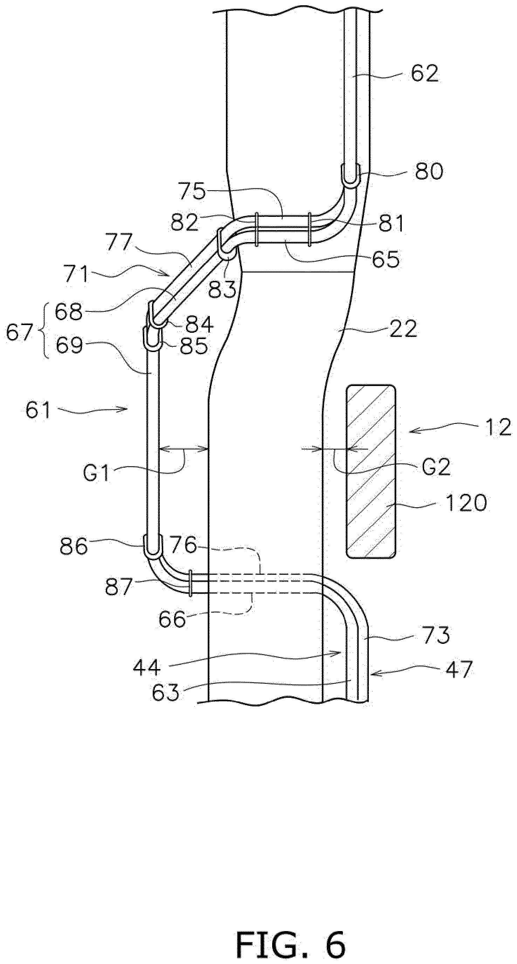

The rear brake pipe 44 described above extends from the hydraulic unit 33 to the rear brake 32. As illustrated in FIG. 3, at least a portion of the rear brake pipe 44 is disposed along the first main frame 12. FIG. 5 is a perspective view showing the rear brake pipe 44 and its surroundings. FIG. 6 is a top view schematically showing the rear brake pipe 44, the exhaust pipe 22, and the first main frame 12. In addition, in FIG. 6, the first main frame 12 is illustrated in the VI-VI cross section in FIG. 3.

As illustrated in FIGS. 5 and 6, the rear brake pipe 44 includes a first bent portion 61, a first front portion 62, a first rear portion 63, and a brake hose 64. The first bent portion 61, the first front portion 62, and the first rear portion 63 are disposed along the first main frame 12. The first bent portion 61, the first front portion 62, and the first rear portion 63 are made of metal pipes. The first bent portion 61 overlaps with the exhaust pipe 22 as seen in the vehicle side view. The hydraulic unit 33 is disposed forward of the first bent portion 61. The first front portion 62 is connected to the first bent portion 61. The first front portion 62 is located forward of the first bent portion 61. The first front portion 62 is located higher than the exhaust pipe 22.

The first rear portion 63 is connected to the first bent portion 61. The first rear portion 63 is located rearward of the first bent portion 61. The first rear portion 63 is located lower than the exhaust pipe 22 with regard to up-down direction of the straddled vehicle 1. As illustrated in FIG. 6, the first front portion 62 and the first rear portion 63 are aligned in a straight line as seen in the vehicle top view. The first rear portion 63 is connected to the brake hose 64 via the connector 53. The brake hose 64 is made of a flexible material such as rubber. The brake hose 64 is connected to the rear brake 32.

The first bent portion 61 includes a linear shape as seen in the vehicle side view. As illustrated in FIG. 6, the first bent portion 61 is disposed inside the exhaust pipe 22 in the vehicle left-right direction. In the vehicle left-right direction, the gap G1 between the exhaust pipe 22 and the first bent portion 61 is larger than the gap G2 between the vehicle body frame 2 and the exhaust pipe 22. In FIG. 6, "120" indicates a portion of the first main frame 12 that overlaps with the exhaust pipe 22 as seen in the vehicle side view (hereinafter, referred to as "overlapping portion"). The overlapping portion 120 is disposed outside the exhaust pipe 22 in the vehicle left-right direction. That is, the exhaust pipe 22 is disposed between the first bent portion 61 and the overlapping portion 120 in the vehicle left-right direction.

The first bent portion 61 includes a first upper portion 65, a first lower portion 66, and a first side portion 67. The first upper portion 65 is disposed above the exhaust pipe 22 with regard to up-down direction of the straddled vehicle 1. As seen in the vehicle top view, the first upper portion 65 overlaps with the exhaust pipe 22. The first upper portion 65 extends linearly in the vehicle left-right direction. The first upper portion 65 is bent perpendicular to the first front portion 62. The first lower portion 66 is disposed below the exhaust pipe 22. The first lower portion 66 overlaps with the exhaust pipe 22 as seen in the vehicle top view. The first lower portion 66 extends linearly in the vehicle left-right direction. The first lower portion 66 is bent perpendicular to the first rear portion 63.

The first side portion 67 is disposed inside the exhaust pipe 22 in the vehicle left-right direction. The first side portion 67 overlaps with the exhaust pipe 22 as seen in the vehicle side view. The first side portion 67 includes a first straight portion 68 and a second straight portion 69. The first side portion 67 has a shape bent between the first straight portion 68 and the second straight portion 69 as seen in the vehicle top view. The first straight portion 68 is connected to the first upper portion 65 and the second straight portion 69. The second straight portion 69 is connected to the first straight portion 68 and the first lower portion 66. The second straight portion 69 extends in parallel with the first front portion 62 and the first rear portion 63 as seen in the vehicle top view. The first straight portion 68 is inclined with respect to the second straight portion 69. The gap G1 between the exhaust pipe 22 and the first bent portion 61 described above is a gap between the second straight portion 69 and the exhaust pipe 22 in the vehicle left-right direction.

The rear connecting pipe 47 described above extends from the hydraulic unit 33 to the rear master cylinder 46 via the connector 53. Although the rear master cylinder 46 is omitted in FIG. 3 for ease of understanding, the rear master cylinder 46 is disposed inside the first main frame 12 in the vicinity of, for example, the brake pedal 45.

As illustrated in FIGS. 5 and 6, the rear connecting pipe 47 includes a second bent portion 71, a second front portion 72, and a second rear portion 73. The second bent portion 71, the second front portion 72, and the second rear portion 73 are made of metal pipes. The second bent portion 71, the second front portion 72, and the second rear portion 73 have the same shapes as the first bent portion 61, the first front portion 62, and the first rear portion 63 of the rear brake pipe 44, respectively. The second bent portion 71 is disposed in parallel with the first bent portion 61. As illustrated in FIG. 6, the second bent portion 71 is connected to the first bent portion 61 by clips 80 to 87. The second front portion 72 is disposed in parallel with the first front portion 62. The second rear portion 73 is disposed in parallel with the first rear portion 63.

As illustrated in FIGS. 5 and 6, the second bent portion 71 includes a second upper portion 75, a second lower portion 76, and a second side portion 77. The second upper portion 75, the second lower portion 76, and the second side portion 77 have the same shapes as the first upper portion 65, the first lower portion 66, and the first side portion 67, respectively. The second upper portion 75 is disposed parallel to the first upper portion 65. The second lower portion 76 is disposed in parallel with the first lower portion 66. The second side portion 77 is disposed in parallel with the first side portion 67.

In the straddled vehicle 1 according to the present embodiment described above, the rear brake pipe 44 is disposed so as to avoid the exhaust pipe 22 at the first bent portion 61. As a result, the brake oil in the rear brake pipe 44 is suppressed from being affected by heat of the exhaust pipe 22 while avoiding interference between the exhaust pipe 22 and the rear brake pipe 44. Further, due to the shape of the first bent portion 61 described above, the length of the rear brake pipe 44 can be shortened while avoiding interference with the exhaust pipe 22.

The first bent portion 61 is disposed inside the exhaust pipe 22 in the vehicle left-right direction. If the first bent portion 61 is disposed outside the exhaust pipe 22 in the vehicle left-right direction, the arrangement of the first bent portion 61 is restricted by the first main frame 12 disposed outside the exhaust pipe 22. However, since the first bent portion 61 is disposed inside the exhaust pipe 22, the first bent portion 61 can be disposed without being restricted by the first main frame 12. As a result, it becomes easy to provide a large distance between the exhaust pipe 22 and the first bent portion 61. Therefore, the brake oil in the rear brake pipe 44 is further suppressed from being affected by the heat of the exhaust pipe 22.

The second bent portion 71 of the rear connecting pipe 47 has the same shape as the first bent portion 61 of the rear brake pipe 44. Therefore, the same effect as that of the rear brake pipe 44 described above can be obtained for the rear connecting pipe 47.

The configuration of the straddled vehicle 1 is not limited to that of the above embodiment, and may be changed. For example, the shape of the first main frame 12 or the second main frame 13 may be changed. The shape of the first bent portion 61 is not limited to that of the above embodiment, and may be changed. For example, the first straight portion 68 and the second straight portion 69 may be aligned on a straight line as seen in the vehicle top view. That is, the first side portion 67 may have a linear shape as seen in the vehicle top view.

The first front portion 62 and the first rear portion 63 may be disposed so as to be offset from the straight line as seen in the vehicle top view. The angle between the first upper portion 65 of the first bent portion 61 and the first front portion 62 is not limited to vertical. The angle between the first upper portion 65 and the first front portion 62 of the first bent portion 61 may be larger than vertical or smaller than vertical. The angle between the first lower portion 66 of the first bent portion 61 and the first rear portion 63 is not limited to vertical. The angle between the first lower portion 66 and the first rear portion 63 of the first bent portion 61 may be larger than vertical or smaller than vertical.

The arrangement of the hydraulic unit 33 and the rear brake 32 is not limited to that of the above embodiment, and may be changed. The hydraulic unit 33 and the rear brake 32 may be disposed on the left side with respect to the center line C1 of the straddled vehicle 1. Alternatively, the hydraulic unit 33 and the rear brake 32 may be disposed on different sides in the left-right direction with respect to the center line C1 of the straddled vehicle 1. For example, the hydraulic unit 33 may be disposed on the left side of the center line C1 of the straddled vehicle 1, and the rear brake 32 may be disposed on the right side of the center line C1 of the straddled vehicle 1. Alternatively, the hydraulic unit 33 may be disposed on the right side of the center line C1 of the straddled vehicle 1, and the rear brake 32 may be disposed on the left side of the center line C1 of the straddled vehicle 1.

### REFERENCE SIGNS LIST

2: Vehicle body frame, 6: Engine, 7: Rear wheel, 21: Muffler, 22: Exhaust pipe, 32: Rear brake, 33: Hydraulic unit, 44: Rear brake pipe, 61: First bent portion, 62: First front portion, 63: First rear portion, 65: First upper portion, 66: First lower portion, 67: First side portion, 68: First straight portion, 69: Second straight portion

## Claims

1. A straddled vehicle (1) comprising:
an engine (6);
a vehicle body frame (2) that supports the engine (6);
a rear wheel (7);
a muffler (21) at least partially disposed higher than the rear wheel (7) with regard to a up-down direction of the straddled vehicle (1);
an exhaust pipe (22) that intersects the vehicle body frame (2) as seen in a vehicle side view and extends from the engine (6) to the muffler (21) through an inside of the vehicle body frame (2) in a left-right direction of the straddled vehicle (1);
a rear brake (32) configured to brake the rear wheel (7);
a hydraulic unit (33) configured to control hydraulic pressure to the rear brake (32); and
a rear brake pipe (44) extending from the hydraulic unit (33) to the rear brake (32) and at least partially disposed along the vehicle body frame (2) in a front-rear direction of the straddled vehicle (1), wherein
the rear brake pipe (44) includes a bent portion (61) that overlaps with the exhaust pipe (22) as seen in the vehicle side view, and
the bent portion (61) is disposed further inside of the vehicle body frame (2) with regard to the exhaust pipe (22) in the left-right direction of the straddled vehicle (1).

2. The straddled vehicle (1) according to claim 1, wherein in the left-right direction of the straddled vehicle (1), a gap (G1) between the exhaust pipe (22) and the bent portion (61) is larger than a gap (G2) between the vehicle body frame (2) and the exhaust pipe (22).

3. The straddled vehicle (1) according to claim 1 or 2, wherein the bent portion (61) includes a linear shape as seen in the vehicle side view.

4. The straddled vehicle (1) according to any one of claims 1 to 3, wherein the rear brake pipe (44) further includes
a front portion (62) connected to the bent portion (61) and located forward of the bent portion (61) in the front-rear direction of the straddled vehicle (1), and
a rear portion (63) connected to the bent portion (61) and located rearward of the bent portion (61) in the front-rear direction of the straddled vehicle (1), and
as seen in a vehicle top view, the front portion (62) and the rear portion (63) are aligned in a straight line.

5. The straddled vehicle (1) according to any one of claims 1 to 4, wherein the bent portion (61) includes an upper portion (65) located above the exhaust pipe (22) with regard to up-down direction of the straddled vehicle (1), and
the upper portion (65) overlaps with the exhaust pipe (22) as seen in the vehicle top view, and extends linearly in the left-right direction of the straddled vehicle (1).

6. The straddled vehicle (1) according to any one of claims 1 to 5, wherein the bent portion (61) includes a lower portion (66) located below the exhaust pipe (22) with regard to up-down direction of the straddled vehicle (1), and
the lower portion (66) overlaps with the exhaust pipe (22) as seen in the vehicle top view, and extends linearly in the left-right direction of the straddled vehicle (1).

7. The straddled vehicle (1) according to any one of claims 1 to 6, wherein the bent portion (61) further includes a side portion (67) disposed inside the exhaust pipe (22) in the left-right direction of the straddled vehicle (1), and
the side portion (67) includes a first straight portion (68) and a second straight portion (69), and has a shape bent between the first straight portion (68) and the second straight portion (69) as seen in the vehicle top view.

8. The straddled vehicle (1) according to any one of claims 1 to 7, wherein the hydraulic unit (33) and the rear brake (32) are disposed on a same side in the left-right direction of the straddled vehicle (1) with respect to a center line (C1) of the straddled vehicle (1) extending in the front-rear direction of the straddled vehicle (1).

9. The straddled vehicle (1) according to any one of claims 1 to 8, further comprising:
a front wheel (4);
a front brake (31) configured to brake the front wheel (4);
a front brake operating member (38) for operating the front brake (31); and
a rear brake operating member (45) for operating the rear brake (32), wherein
the hydraulic unit (33) is disposed between the front brake operating member (38) and
the rear brake operating member (45) in the front-rear direction of the straddled vehicle (1) in the vehicle plan view.

10. The straddled vehicle (1) according to any one of claims 1 to 9, wherein the hydraulic unit (33) is disposed forward of the bent portion (61) in the front-rear direction of the straddled vehicle (1).

## Patentansprüche

1. Ein Spreiz-Sitz-Fahrzeug (1), das umfasst:
einen Motor (6);
einen Fahrzeug-Körper-Rahmen (2), der den Motor (6) lagert;
ein Hinterrad (7);
einen Schalldämpfer (21), der zumindest teilweise höher als das Hinterrad (7) in Bezug auf eine Auf-Ab-Richtung des Spreiz-Sitz-Fahrzeugs (1) angeordnet ist;
ein Abgasrohr (22), das den Fahrzeug-Körper-Rahmen (2) in einer Seitenansicht des Fahrzeugs gesehen kreuzt und sich vom Motor (6) zum Schalldämpfer (21) durch eine Innenseite des Fahrzeug-Körper-Rahmens (2) in einer Links-Rechts-Richtung des Spreiz-Sitz-Fahrzeugs (1) erstreckt;
eine hintere Bremse (32), die konfiguriert ist, um das Hinterrad (7) zu bremsen;
eine Hydraulikeinheit (33), die konfiguriert ist, um den Hydraulikdruck zu der hinteren Bremse (32) zu steuern; und
eine hintere Bremsleitung (44), die sich von der Hydraulikeinheit (33) zu der hinteren Bremse (32) erstreckt und zumindest teilweise entlang des Fahrzeug-Körper-Rahmens (2) in einer Vorder-Rück-Richtung des Spreiz-Sitz-Fahrzeugs (1) angeordnet ist, wobei
die hintere Bremsleitung (44) einen gebogenen Abschnitt (61) beinhaltet, der sich mit dem Abgasrohr (22) überlappt, wenn in der Seitenansicht des Fahrzeugs gesehen, und
der gebogene Abschnitt (61) in Bezug auf das Abgasrohr (22) in der Links-Rechts-Richtung des Spreiz-Sitz-Fahrzeugs (1) weiter innerhalb des Fahrzeug-Körper-Rahmens (2) angeordnet ist.

2. Das Spreiz-Sitz-Fahrzeug (1) gemäß Anspruch 1, wobei in der Links-Rechts-Richtung des Spreiz-Sitz-Fahrzeugs (1) ein Spalt (G1) zwischen dem Abgasrohr (22) und dem gebogenen Abschnitt (61) größer ist als ein Spalt (G2) zwischen dem Fahrzeug-Körper-Rahmen (2) und dem Abgasrohr (22).

3. Das Spreiz-Sitz-Fahrzeug (1) gemäß Anspruch 1 oder 2, wobei der gebogene Abschnitt (61) in der Seitenansicht des Fahrzeugs eine lineare Form aufweist.

4. Das Spreiz-Sitz-Fahrzeug (1) gemäß irgendeinem der Ansprüche 1 bis 3, wobei die hintere Bremsleitung (44) weiterhin beinhaltet
einen vorderen Abschnitt (62), der mit dem gebogenen Abschnitt (61) verbunden ist und in der Vorder-Rück-Richtung des Spreiz-Sitz-Fahrzeugs (1) vor dem gebogenen Abschnitt (61) angeordnet ist, und
einen hinteren Abschnitt (63), der mit dem gebogenen Abschnitt (61) verbunden ist und in der Vorder-Rück-Richtung des Spreiz-Sitz-Fahrzeugs (1) hinter dem gebogenen Abschnitt (61) angeordnet ist, und
in einer Fahrzeug-Draufsicht, der vordere Abschnitt (62) und der hintere Abschnitt (63) in einer geraden Linie ausgerichtet sind.

5. Das Spreiz-Sitz-Fahrzeug (1) gemäß irgendeinem der Ansprüche 1 bis 4, wobei der gebogene Abschnitt (61) einen oberen Abschnitt (65) beinhaltet, der in Bezug auf die Auf-Ab-Richtung des Spreiz-Sitz-Fahrzeugs (1) über dem Abgasrohr (22) angeordnet ist, und
der obere Abschnitt (65) überschneidet sich mit dem Abgasrohr (22), wie in der Fahrzeug-Draufsicht gesehen, und erstreckt sich linear in der Links-Rechts-Richtung des Spreiz-Sitz-Fahrzeugs (1).

6. Das Spreiz-Sitz-Fahrzeug (1) gemäß irgendeinem der Ansprüche 1 bis 5, wobei der gebogene Abschnitt (61) einen unteren Abschnitt (66) beinhaltet, der in Bezug auf die Auf-Ab-Richtung des Spreiz-Sitz-Fahrzeugs (1) unterhalb des Abgasrohrs (22) angeordnet ist, und
der untere Abschnitt (66) überschneidet sich mit dem Abgasrohr (22), wie in der Fahrzeug-Draufsicht gesehen, und erstreckt sich linear in der Links-Rechts-Richtung des Spreiz-Sitz-Fahrzeugs (1).

7. Das Spreiz-Sitz-Fahrzeug (1) gemäß irgendeinem der Ansprüche 1 bis 6, wobei der gebogene Abschnitt (61) weiterhin einen Seitenabschnitt (67) beinhaltet, der innen von dem Abgasrohr (22) in der Links-Rechts-Richtung des Spreiz-Sitz-Fahrzeugs (1) angeordnet ist, und
der Seitenabschnitt (67) einen ersten geraden Abschnitt (68) und einen zweiten geraden Abschnitt (69) beinhaltet und eine Form hat, die zwischen dem ersten geraden Abschnitt (68) und dem zweiten geraden Abschnitt (69) gebogen ist, wie in der Fahrzeug-Draufsicht gesehen.

8. Das Spreiz-Sitz-Fahrzeug (1) gemäß irgendeinem der Ansprüche 1 bis 7, wobei die Hydraulikeinheit (33) und die hintere Bremse (32) auf derselben Seite in der Links-Rechts-Richtung des Spreiz-Sitz-Fahrzeugs (1) in Bezug auf eine Mittellinie (C1) des Spreiz-Sitz-Fahrzeugs (1), die sich in der Vorder-Rück-Richtung des Spreiz-Sitz-Fahrzeugs (1) erstreckt, angeordnet sind.

9. Das Spreiz-Sitz-Fahrzeug (1) gemäß irgendeinem der Ansprüche 1 bis 8, das weiterhin umfasst:
ein Vorderrad (4);
eine vordere Bremse (31), die konfiguriert ist, um das Vorderrad (4) zu bremsen;
ein vorderes Bremsbetätigungselement (38) zur Betätigung der vorderen Bremse (31); und
ein hinteres Bremsbetätigungselement (45) zur Betätigung der hinteren Bremse (32), wobei
die Hydraulikeinheit (33) zwischen dem vorderen Bremsbetätigungselement (38) und dem hinteren Bremsbetätigungselement (45) in der Vorder-Rück-Richtung des Spreiz-Sitz-Fahrzeugs (1) in der Fahrzeug-Draufsicht angeordnet ist.

10. Das Spreiz-Sitz-Fahrzeug (1) gemäß irgendeinem der Ansprüche 1 bis 9, wobei die Hydraulikeinheit (33) in Vorder-Rück-Richtung des Spreiz-Sitz-Fahrzeugs (1) vor dem gebogenen Abschnitt (61) angeordnet ist.

## Revendications

1. Véhicule à selle (1) comprenant :
un moteur thermique (6),
un cadre de véhicule (2) qui supporte le moteur (6),
une roue arrière (7),
un silencieux d'échappement (21) au moins placé partiellement plus haut que la roue arrière (7) par rapport à la direction haut bas du véhicule à selle (1),
un tuyau d'échappement (22) qui coupe le cadre de véhicule (2) comme on peut le voir dans une vue latérale du véhicule et qui se déploie depuis le moteur (6) jusqu'au silencieux (21) par l'intérieur du cadre de véhicule (2) dans la direction gauche droite du véhicule à selle (1),
un frein arrière (32) configuré pour freiner la roue arrière (7),
une unité hydraulique (33) configurée pour commander la pression hydraulique vers le frein arrière (32), et
une conduite de frein arrière (44) se déployant depuis l'unité hydraulique (33) jusqu'au frein arrière (32) et au moins partiellement placée le long du cadre de véhicule (2) dans la direction avant arrière du véhicule à selle (1), où
la conduite de frein arrière (44) inclut une partie coudée (61) qui chevauche le tuyau d'échappement (22) comme on peut le voir dans la vue latérale du véhicule, et
la partie coudée (61) est placée plus loin à l'intérieur du cadre de véhicule (2) que le tuyau d'échappement (22) dans la direction gauche droite du véhicule à selle (1).

2. Véhicule à selle (1) selon la revendication 1, dans lequel, dans la direction gauche droite du véhicule à selle (1), un intervalle (G1) ménagé entre le tuyau d'échappement (22) et la partie coudée (61) est plus grand qu'un intervalle (G2) ménagé entre le cadre de véhicule (2) et le tuyau d'échappement (22).

3. Véhicule à selle (1) selon la revendication 1 ou la revendication 2, dans lequel la partie coudée (61) inclut une forme linéaire comme on peut le voir dans la vue latérale du véhicule.

4. Véhicule à selle (1) selon l'une quelconque des revendications 1 à 3, dans lequel la conduite de frein arrière (44) inclut en outre :
une partie avant (62) raccordée à la partie coudée (61) et située à l'avant de la partie coudée (61) dans la direction avant arrière du véhicule à selle (1), et
une partie arrière (63) raccordée à la partie coudée (61) et située à l'arrière de la partie coudée (61) dans la direction avant arrière du véhicule à selle (1), et
comme on peut le voir dans une vue de dessus du véhicule, la partie avant (62) et la partie arrière (63) sont alignées sur une ligne droite.

5. Véhicule à selle (1) selon l'une quelconque des revendications 1 à 4, dans lequel la partie coudée (61) inclut une partie supérieure (65) située au-dessus du tuyau d'échappement (22) par rapport à la direction haut bas du véhicule à selle (1), et
la partie supérieure (60) chevauche le tuyau d'échappement (22) comme on peut le voir dans la vue de dessus du véhicule et s'étend linéairement dans la direction gauche droite du véhicule à selle (1).

6. Véhicule à selle (1) selon l'une quelconque des revendications 1 à 5, dans lequel la partie coudée (61) inclut une partie inférieure (66) située en dessous du tuyau d'échappement (22) par rapport à la direction haut bas du véhicule à selle (1), et
la partie inférieure (66) chevauche le tuyau d'échappement (22) comme on peut le voir dans la vue de dessus du véhicule et s'étend linéairement dans la direction gauche droite du véhicule à selle (1).

7. Véhicule à selle (1) selon l'une quelconque des revendications 1 à 6, dans lequel la partie coudée (61) inclut en outre une partie latérale (67) placée à l'intérieur du tuyau d'échappement (22) dans la direction gauche droite du véhicule à selle (1), et
la partie latérale (67) inclut une première partie droite (68) et une seconde partie droite (69) et présente une forme coudée entre la première partie droite (68) et la seconde partie droite (69) comme on peut le voir dans la vue de dessus du véhicule.

8. Véhicule à selle (1) selon l'une quelconque des revendications 1 à 7, dans lequel l'unité hydraulique (33) et le frein arrière (32) sont placés sur un même côté dans la direction gauche droite du véhicule à selle (1) par rapport à une droite centrale (C1) du véhicule à selle (1) s'étendant dans la direction avant arrière du véhicule à selle (1).

9. Véhicule à selle (1) selon l'une quelconque des revendications 1 à 8, comprenant en outre :
une roue avant (4),
un frein avant (31) configuré pour freiner la roue avant (4),
un élément de manoeuvre de frein avant (38) destiné à manoeuvrer le frein avant (31), et
un élément de manoeuvre de frein arrière (45) destiné à manoeuvrer le frein arrière (32), où
l'unité hydraulique (33) est placée entre l'élément de manoeuvre de frein avant (38) et l'élément de manoeuvre de frein arrière (45) dans la direction avant arrière du véhicule à selle (1) dans la vue en plan du véhicule.

10. Véhicule à selle (1) selon l'une quelconque des revendications 1 à 9, dans lequel l'unité hydraulique (33) est placée à l'avant de la partie coudée (61) dans la direction avant arrière du véhicule à selle (1).
